# EUROPÄISCHE PATENTANMELDUNG

(11) **EP 1 788 269 A1**
(43) Veröffentlichungstag der Anmeldung: **23.05.2007**
(21) Anmeldenummer: 06023393.9
(22) Anmeldetag: 10.11.2006
(51) Int. Cl.: F16D 3/74, F16D 3/77

(54) **Elastische Wellenkupplung**

(30) Priorität: 22.11.2005 DE 102005055605
(71) Anmelder: Centa-Antriebe Kirschey GmbH, 42781 Haan (DE)
(72) Erfinder: Kirschey, Gerhard, 42329 Wuppertal (DE)
(74) Vertreter: Ostriga, Sonnet, Wirths & Roche

(57) **Zusammenfassung**

Beschrieben ist eine elastische Wellenkupplung zur Verbindung eines antreibenden Aggregates wie eine Schwungscheibe eines Dieselmotors mit einem angetriebenen Aggregat wie einer Wellennabe, mit zumindest einem dreh- und radialelastischen Kupplungselement, das einen gummielastischen Ringkörper mit jeweils an- und abtriebseitig anvulkanisiertem Befestigungsflansch umfasst und mit einer Bolzenkupplung, mittels derer die elastische Wellenkupplung mit dem angetriebenen Aggregat axial steckbar verbunden ist.

Aufgabe der Erfindung ist es, diese elastische Wellenkupplung dahingehend zu verbessern, dass sie nicht nur geringe, sondern auch mäßige anguläre Fluchtungsfehler zwischen antreibenden und angetriebenen Aggregaten ausgleichen kann.

Die Lösung der Aufgabe erfüllt eine elastische Wellenkupplung wobei zur Verbindung vom abtriebseitigen Befestigungsflansch und der Bolzenkupplung eine membranähnliche Ringscheibe vorgesehen ist, deren Winkelelastizität anguläre Fluchtungsfehler der zu verbindenden Aggregate ausgleicht, und dass die Bolzen der Bolzenkupplung an der Ringscheibe angeordnet sind und die Ringscheibe an dem abtriebseitigen Befestigungsflansch angeordnet ist.

## Beschreibung

Die Erfindung betrifft eine elastische Wellenkupplung zur Verbindung eines antreibenden Aggregates wie einer Schwungscheibe eines Dieselmotors mit einem angetriebenen Aggregat wie einer Wellennabe, mit zumindest einem dreh- und radialelastischen Kupplungselement, das einen gummielastischen Ringkörper mit jeweils an- und abtriebseitig anvulkanisiertem Befestigungsflansch umfasst und mit einer Bolzenkupplung, mittels derer die elastische Wellenkupplung mit dem angetriebenen Aggregat axial steckbar verbunden ist.

Elastische Wellenkupplungen der gattungsgemäßen Art sind durch offenkundige Vorbenutzung der Anmelderin wie auch aus einem Katalog der Anmelderin - CENTAX^{®} Elastische Kupplungen, Druckvermerk CX-B-2-90 - bekannt. Im Stand der Technik dient das dreh- und radialelastische ringförmige Kupplungselement dazu, Torsionskräfte zwischen an- und abgetriebenen Aggregaten in gewissem Maße aufzunehmen und einen radialen Versatz der Aggregate auszugleichen. Axiale und winklige Fluchtungsfehler hingegen kann der gummielastische Ringkörper nur in begrenztem Maße ausgleichen. Um axiale Fluchtungsfehler und im Betrieb zumeist durch Wärme hervorgerufene Materialdehnungen in axialer Richtung auffangen zu können, ist das gummielastische Ringelement im Stand der Technik über eine Bolzenkupplung mit dem angetriebenen Aggregat verbunden. Neben den axialen Verlagerungen kompensiert die drehsteife Bolzenkupplung in einem sehr geringen Maße auch anguläre Fluchtungsfehler, so dass die Anordnung aus gummielastischem Ringelement und Bolzenkupplung in Summe genügend Reserven bietet, den in einer Vielzahl von Anwendungen auftretenden geringen Winkelversatz zwischen antreibenden und angetriebenen Aggregat auszugleichen.

Neben einer vergleichsweise universellen Einsetzbarkeit ist die elastische Wellenkupplung bei vorteilhafter Funktionalität aus technisch vergleichsweise einfachen und kostengünstig herzustellenden Einzelelementen aufgebaut.

Dennoch wird die vorbeschriebene, an sich vorteilhafte elastische Wellenkupplung insbesondere hinsichtlich der möglichen Einsatzbereiche weiterhin als verbesserungsfähig angesehen, da die durch einen größeren Winkelversatz hervorgerufenen Taumelbewegungen den Kern des gummielastischen Ringkörpers plastifizieren und so schädigen können.

Aufgabe der Erfindung ist es daher, die vorbeschriebene elastische Wellenkupplung dahingehend zu verbessern, dass sie nicht nur geringe, sondern auch mäßige anguläre Fluchtungsfehler zwischen antreibenden und angetriebenen Aggregaten ausgleichen kann.

Die Lösung der erfindungsgemäßen Aufgabe erfüllt eine elastische Wellenkupplung mit den Merkmalen des Anspruches 1, insbesondere mit den kennzeichnenden Merkmalen, wonach zur Verbindung des abtriebseitigen Befestigungsflansches mit der Bolzenkupplung eine membranähnliche Ringscheibe vorgesehen ist, deren Winkelelastizität anguläre Fluchtungsfehler der zu verbindenden Aggregate ausgleicht, und dass die Bolzen der Bolzenkupplung an der Ringscheibe angeordnet sind und die Ringscheibe an dem abtriebseitigen Befestigungsflansch angeordnet ist.

Der Einsatz einer membranähnliche Ringscheibe zwischen gummielastischem Ringkörper und Bolzenkupplung ermöglicht gegenüber dem Stand der Technik den Ausgleich mäßiger angulärer Fluchtungsfehler, da die durch den Winkelversatz auftretenden Taumelbewegungen von der membranähnlichen Ringscheibe aufgenommen werden. Die membranähnliche Ringscheibe puffert so die dynamischen Belastungen gegenüber dem gummielastischen Ringkörper ab, ohne dass dabei auf die ansonsten vorteilhafte einfache und kostengünstige Konstruktion der elastischen Wellenkupplung verzichtet werden müsste. Insbesondere ist weiterhin ein einfacher Ein- und Ausbau der Kupplung durch die axial steckbare Bolzenkupplung sowie der Ausgleich radialer und axialer Aggregatverlagerungen gewährleistet.

Die Erfindung betrifft darüber hinaus eine elastische Wellenkupplung zur Verbindung eines antreibenden Aggregates wie einer Schwungscheibe eines Dieselmotors mit einem angetriebenen Aggregat wie einer Wellennabe, mit zumindest einem dreh- und radialelastischen, im wesentlichen ringförmigen Kupplungselement, das von umfänglich beabstandeten Ringsegmenten gebildet ist, die jeweils zumindest einen gummielastischen Körper umfassen, der jeweils an-und abtriebseitig anvulkanisierte Flanschsegmente aufweist, wobei die Flanschsegmente der einzelnen Ringsegmente einen an- und einen abtriebseitigen Befestigungsflansch bilden und mit einer axial steckbar ausgebildeten Bolzenkupplung, mittels derer die elastische Wellenkupplung mit dem angetriebenen Aggregat verbunden ist.

Derartige Kupplungen weisen prinzipiell dieselben Vorzüge wie die beschriebene Kupplung gemäß Oberbegriff des Anspruches 1 auf. Insbesondere der aus einzelnen Ringsegmenten aufgebaute elastische Ringkörper ermöglicht es darüber hinaus auf vorteilhafte Weise, auch sehr große radial- und torsionalelastische Ringkörper für sehr groß dimensionierte Antriebseinheiten, beispielsweise Schiffsdieselmotoren, wirtschaftlich herstellen und montieren zu können. Darüber hinaus lassen sich die einzelnen Ringsegmente des gummielastischen Ringkörpers zu Wartungs- und Austauschzwecken leicht radial demontieren, so dass die mittels der elastischen Wellenkupplung verbundenen Aggregate nicht axial auseinandergerückt werden müssen.

Ein derart segmentierter Ringkörper als Bestandteil einer gemäß Oberbegriff des Anspruches 2 gattungsgemäßen elastischen Wellenkupplung ist beispielsweise aus DE 102 36 295 A1 bekannt.

Ausgehend von der vorgenannten Aufgabe ergibt sich die erfindungsgemäße Lösung bei einer elastischen Wellenkupplung mit den Merkmalen des Anspruches 2, insbesondere mit den Merkmalen des Kennzeichenteils, wonach zur Verbindung des abtriebseitigen Befestigungsflansches mit der Bolzenkupplung eine membranähnliche Ringscheibe vorgesehen ist, deren Winkelelastizität anguläre Fluchtungsfehler der zu verbindenden Aggregate ausgleicht, und dass die Bolzen der Bolzenkupplung an der Ringscheibe angeordnet sind und die Ringscheibe an dem abtriebseitigen Befestigungsflansch angeordnet ist.

Eine elastische Wellenkupplung gemäß Anspruch 2 weist dieselben Vorteile wie eine elastische Wellenkupplung gemäß Anspruch 1 auf. Der Einsatz einer membranähnlichen Ringscheibe zwischen gummielastischem Ringkörper und Bolzenkupplung ermöglicht gegenüber dem Stand der Technik den Ausgleich mäßiger angulärer Fluchtungsfehler, da die durch den Winkelversatz auftretenden starken Taumelbewegungen von der membranähnlichen Ringscheibe aufgenommen werden. Die membranähnliche Ringscheibe puffert so die dynamischen Belastungen gegenüber dem gummielastischen Ringkörper ab, ohne dass dabei auf die ansonsten vorteilhafte einfache und kostengünstige Konstruktion der elastischen Wellenkupplung verzichtet werden müsste. Insbesondere sind weiterhin ein einfacher Ein- und Ausbau der Kupplung durch die axial steckbare Bolzenkupplung sowie der Ausgleich radialer und axialer Aggregatverlagerungen gewährleistet.

Aus dem heterogenen Stand der Technik ist durch offenkundige Vorbenutzung wie durch einen Produktkatalog - CENTAX Hochdrehelastische Kupplungen Baureihen S/E/D, Druckvermerk CX-S/E/S-88 - eine hochelastische Kupplung bekanntgeworden, welche einen unsegmentierten Ringkörper gemäß Oberbegriff des Anspruches 1 und zusätzlich eine Federstahlmembran aufweist. Dabei ist die Membran über eine Buchse vom abtriebsseitigen Flansch des gummielastischen Ringkörpers beabstandet angeordnet und über Schraubbolzen an einer abtriebseitigen Wellennabe befestigt. In DE 43 04 611 C2 ist eine Wellenkupplung dargestellt, die insgesamt vier voneinander beabstandete Federstahlmembranen in Kombination mit unsegmentierten gummielastischen Ringkörpern zeigt.

Bei diesen Kupplungen gleicht die Federstahlmembran sehr große winklige Fluchtungsfehler und axiale Verlagerungen aus. Um die so hervorgerufenen dynamischen Kräfte abfangen zu können, ist eine Stahlmembran notwendig, die durch Härtung und mehrfache Oberflächenbehandlung Federstahlqualität aufweist und daher aufwendig und teuer in der Produktion ist. Die beabstandete Anordnung zum Befestigungsflansch, die einen notwendigen Bewegungsraum für die Federstahlmembran gewährleistet, vergrößert darüber hinaus den zum Einbau notwendigen axialen Raum einer solchen Kupplung. In Abhängigkeit der Kupplungsgröße und insbesondere wenn große Drehmomente zu übertragen sind, müssen mehrere Federstahlmembranen in axialer Richtung hintereinander angeordnet werden, da eine einzige Federstahlmembran von entsprechender Dicke keine ausreichende Elastizität mehr aufweist. Um Reibungskorrosion zwischen den Federstahlmembranen zu verhindern, ist eine beabstandete Anordnung oder aber eine aufwendige Isolierung zwischen den einzelnen Membranen erforderlich.

Die in vielen Einbausituationen geforderte axiale Steckbarkeit ist bei Kupplungen mit Federstahlmembran membranseitig kaum realisierbar. Ein starker Winkelversatz zwischen den Aggregaten führt zu einer sehr starken Taumelbewegung der Federstahlmembran, die sich auf die Bolzen einer Bolzenkupplung übertrüge. Es käme daher zu einer ständigen Relativbewegung der Bolzen einer Bolzenkupplung in den korrespondierenden abtriebseitigen Aufnahmeöffnungen, so dass durch die ständige hohe Reibung eine so eingesetzte Bolzenkupplung schnell verschleißen würde.

Deshalb ist der Einsatz einer Federstahlmembran zum Ausgleich von angulären Fluchtungsfehlern zwischen dem angetriebenen Aggregat und dem abgetriebenen Aggregat nur dort sinnvoll, wo eine entsprechende Elastizität aufgrund großem Winkelversatz zwingend erforderlich ist, sich der erhöhte konstruktive und wirtschaftliche Aufwand vertreten lässt und Nachteile wie beispielsweise fehlende membranseitige axiale Steckbarkeit in Kauf genommen werden können.

Besonders bevorzugt ist eine Ausführungsform, bei der sich eine elastische Wellenkupplung gemäß unabhängigem Anspruch 2 zusätzlich dadurch kennzeichnet, dass die membranähnliche, winkelelastische Ringscheibe außenumfänglich an dem aus mehreren Flanschsegmenten gebildeten Befestigungsflansch angeordnet ist und dass die Ringscheibe die einzelnen Ringsegmente des Kupplungselementes gegen axiale Verformung abstützend miteinander kuppelt. Bei einer solchen Wellenkupplung, bei der der Ringkörper aus einzelnen Ringsegmenten zusammengesetzt ist, kann die membranähnliche Ringscheibe aufgrund ihrer gegenüber einer Federstahlmembran größeren Stärke und Steifigkeit die einzelnen Ringsegmente gegen die durch das übertragene Drehmoment hervorgerufene axiale Verformung abstützen. Auf einen sonst notwendigen, separaten Stützring kann daher verzichtet werden. Dies vermindert zusätzlich den notwendigen axialen Einbauraum einer solchen Wellenkupplung.

Bei der erfindungsgemäßen elastischen Wellenkupplung ist es von Vorteil, wenn die Bolzen der Bolzenkupplung nahe des Innenumfangs der winkelelastischen Ringscheibe an dieser angeordnet sind, so dass zwischen der Innenumfangsbefestigung der Bolzenkupplung und der Außenumfangsbefestigung am Befestigungsflansch des Ringkörpers bzw. der Ringsegmente eine möglichst große Fläche der Ringscheibe zur Absorption der durch anguläre Fluchtungsfehler hervorgerufenen Taumelbewegung zur Verfügung steht.

Es ist von Vorteil, wenn die Bolzen der Bolzenkupplung formschlüssig in Befestigungsbohrungen der membranähnlichen Ringscheibe eingreifen, so dass die Ringscheibe ein vom Antrieb auf den Abtrieb zu übertragendes Drehmoment formschlüssig auf die Bolzen überträgt.

Zwischen Ringscheibe und Befestigungsflansch ist zumindest ein als flachquerschnittiger Versteifungsring ausgebildetes Widerlager angeordnet, in das die Befestigungsschrauben der Bolzenkupplung, die Ringscheibe antriebsseitig durchgreifend, eingreifen.

Wenn bei elastischen Wellen kupplungen der abtriebsseitige Befestigungsflansch in Richtung des antriebsseitigen Befestigungsflansches eingesenkt ist und der eingesenkte Befestigungsflansch und die winkelelastische Ringscheibe einen Ringraum bilden, in dem der als Widerlager ausgebildete, flachquerschnittige Versteifungsring angeordnet ist, kann der axiale Einbauraum für die erfindungsgemäße Wellenkupplung weiter reduziert werden. Gleichzeitig bietet der Ringraum den Bewegungsraum zur Aufnahme der Taumelbewegungen der membranähnlichen Ringscheibe.

Die erfindungsgemäße Ringscheibe ist aus Metall, insbesondere aus Stahlblech gebildet, wobei das Stahlblech vorzugsweise ungehärtet ist und dessen Oberflächen unbehandelt sind. Für die vorgesehenen Verwendungszwecke der Kupplung ist es ausreichend, wenn die Ringscheibe so dimensioniert ist, dass sie einen Winkelversatz von maximal etwa 0,5° zulässt, da die elastische Wellenkupplung in der Summe der Ausgleichsmöglichkeiten von gummielastischem Ringkörper bzw. den Ringkörpersegmenten, der Bolzenkupplung und der erfindungsgemäßen Ringscheibe einen ausreichend großen Winkelversatz ausgleichen kann.

Weitere Vorteile der erfindungsgemäßen Wellenkupplung ergeben sich aus der nachfolgenden Zeichnungsbeschreibung. Es zeigen:
- Fig. 1: eine erfindungsgemäße elastische Wellenkupplung mit angeflanschter Abtriebsnabe in einem Halb-Längsschnitt, und
- Fig. 2: eine Darstellung entsprechend Fig. 1 mit alternativ angeflanschter Abtriebsnabe.

In den Zeichnungen ist eine elastische Wellenkupplung insgesamt mit der Bezugsziffer 10 versehen.

Die Wellenkupplung 10 besteht aus drei Elementen, nämlich einem dreh- und radialelastischen Kupplungselement 11, einer membranähnlichen Ringscheibe 12 und einer Bolzenkupplung 13.

Die Wellenkupplung 10 verbindet ein nicht dargestelltes Antriebsaggregat mit einem angetriebenen Aggregat, welches hier als Wellennabe 14 mit einem Nabenflansch 15 dargestellt ist. Das Kupplungselement 11 besteht im vorliegenden Ausführungsbeispiel aus einem ringförmigen Gummikörper 16, dessen antriebsseitige Seitenfläche 17 und abtriebseitige Seitenfläche 18 jeweils einen anvulkanisierten ringförmigen Befestigungsflansch 19 bzw. 20 aufweisen.

Der Befestigungsflansch 19 dient der Anordnung der Wellenkupplung 10 an einem Antriebsaggregat, z.B. am Schwungrad eines Dieselmotors. Über den abtriebsseitigen Befestigungsflansch 20 sind membranähnliche Ringscheibe 12 und Bolzenkupplung 13 mit dem Kupplungselement 11 verbunden. Auffällig in der vorliegenden Schnittdarstellung ist, dass der gummielastische Ringkörper 16 zwar parallel verlaufende Außen- und Innenumfangsflächen 21 und 22 aufweist, dass sich der ringförmige Gummikörper 16 jedoch ausgehend von seinem Innenumfang u zu seinem Außenumfang U einseitig - vorliegend zur Abtriebsseite hin - konisch erweitert. Diese an sich bekannte Geometrie gewährleistet im Gummikörper 16 über den gesamten Querschnitt gleiche Schubspannungsverhältnisse. Das Kupplungselement 11, bestehend aus dem ringförmigen Gummielement 16 und den Befestigungsflanschen 19 und 20, wird von der Anmelderin als so genanntes "Centax-Element" 11 als integraler Bestandteil einer Vielzahl von Wellenkupplungen vertrieben.

Die Befestigungsflansche 19 und 20 des Centax-Elementes 11 weisen eine Vielzahl von außenumfänglich angeordneten, axial ausgerichteten Befestigungsbohrungen 23 und 24 auf, wobei die Befestigungsbohrungen 23 der antriebsseitigen Befestigung der Wellenkupplung dienen. Die Ringscheibe 12 weist zu den Befestigungsbohrungen 24 fluchtende Bohrungen auf, so dass das Kupplungselement 11 und die Ringscheibe 12 über Schraubverbindungen 25 aneinander befestigbar sind. Der konischen Form der Seitenfläche 18 des Centax-Elementes 11 folgend ist der Befestigungsflansch 20 zur Antriebsseite hin eingesenkt, so dass zwischen dem Befestigungsflansch 20 und der Ringscheibe 12 ein Ringraum 26 gebildet ist. Innerhalb dieses Ringraumes ist ein als Widerlager ausgebildeter Versteifungsring 27 im Bereich des Innenumfangs u an der Ringscheibe 12 angeordnet. Der Versteifungsring 27 weist Gewindebohrungen 29 auf, die mit innenumfänglich angeordneten und axial ausgerichteten Befestigungsbohrungen 28 der Ringscheibe 12 fluchten.

Die Bolzenkupplung 13 wird von Befestigungsschrauben 30 gebildet, die hülsenartige Bolzen 31 durchgreifen, wobei die Bolzen 31 von Gummihülsen 32 oder Kunststoffhülsen mit elastischen Eigenschaften überfangen sind. Die Anordnung aus Befestigungsschrauben 30, Bolzen 31 und Gummihülsen 32 ist abtriebsseitig an der Ringscheibe 12 angeordnet. Dabei greifen die Bolzen 31 der Bolzenkupplung 13 formschlüssig in Befestigungsbohrungen 28 der membranähnlichen Ringscheibe 12 ein, so dass das Drehmoment bzw. die Umfangskraft des Antriebes formschlüssig von der Ringscheibe 12 auf die Bolzen 31 der Bolzenkupplung 13 übertragen wird. Zur Befestigung der Bolzen 31 an der Ringscheibe 12 werden die Befestigungsschrauben 30, die Ringscheibe 12 abtriebsseitig durchgreifend, in die Gewindebohrungen 29 des Versteifungsringes 27 eingeschraubt. Dabei dient der Versteifungsring 27 nicht nur als Widerlager für die Bolzen 31 und der Schraubbefestigung. Er steift insbesondere auch den Innenumfangsbereich u der winkelelastischen Ringscheibe 12 im Befestigungsbereich der Bolzen 31 aus und verhindert so zusammen mit der Schraubenvorspannung der Befestigungsschrauben 30 ein Kippen und/oder Ausreißen der Bolzen 31 in Folge der wirkenden Umfangskraft oder in Folge der von einem auszugleichenden Winkelversatz hervorgerufenen Taumelbewegungen. Diese werden von der zwischen dem Versteifungsring 27 und der außenumfänglichen Schraubverbindungen 25 liegenden, elastisch nachgebenden Fläche der membranähnlichen Ringscheibe 12 abgefangen.

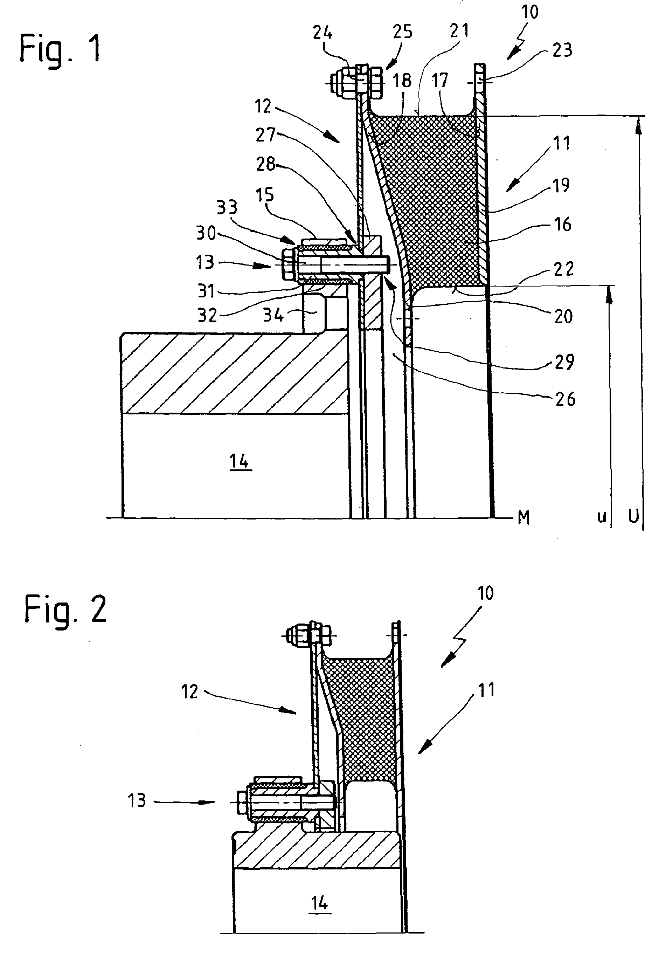

Der Nabenflansch 15 weist mit den Bolzen 31 der Bolzenkupplung 13 korrespondierende Aufnahmeöffnungen 33 auf, die ein Lager für die Bolzen 31 bilden. Zusammen mit den Gummihülsen 32 bilden die Aufnahmeöffnungen 33 ein axial bewegliches Gleitlager aus. Unterhalb der Aufnahmeöffnungen 33 für die Bolzen 31 der Bolzenkupplung 13 sind in Fig. 1 am Gewindeflansch Belüftungsöffnungen 34 angeordnet. Im Betrieb der Wellenkupplung 10 dämpft das Kupplungselement 11 aufgrund seiner Torsionselastizität Drehmomentschwankungen und kann einen von der Mittellinie M abweichenden radialen Versatz des Abtriebes ausgleichen. Darüber hinaus ist das Centax-Element 11 in der Lage, einen geringen Winkelversatz zu kompensieren.

Die Ringscheibe 12 ist membranähnlich ausgebildet, d.h. insbesondere, dass sie zwar wie die Federstahlmembranen aus dem eingangs zitierten Stand der Technik aus Stahl gefertigt ist, es sich jedoch vorzugsweise um ungehärteten Stahl ohne besondere Oberflächenbehandlung wie insbesondere Schleifen handelt. Darüber hinaus weist die Ringscheibe 12 eine größere Materialstärke als eine Federstahlmembran auf, die auf maximale Axial- und Winkelelastizität ausgelegt ist. Die membranähnliche Ringscheibe 12 ist bevorzugt so stark dimensioniert, dass sie einen Winkelversatz von maximal nur etwa 0,5° kompensieren kann.

Das Centax-Element 11 und die Ringscheibe 12 sind über eine an der Ringscheibe 12 befestigte Bolzenkupplung 13 axial steckbar und axial verschieblich an dem angetriebenen Aggregat angeordnet. Die Bolzenkupplung 13 dient dazu, axiale Achsfluchtfehler der Aggregate auszugleichen, und kompensiert axiale Ausdehnungen der Aggregate, insbesondere der Wellen, die zum Beispiel von thermischen Effekten herrühren.

In Fig. 2 ist eine elastische Wellenkupplung 10 mit alternativ angeflanschter Wellennabe 14 dargestellt. Durch die teilweise innerhalb des Centax-Elementes 11 angeordnete Wellennabe 14 kann der axiale Einbauraum für die Wellenkupplung 10 weiter reduziert werden. Da bei einstückigen Kupplungselementen 11 ein radialer Austausch des Kupplungselementes 11 bei der in Fig. 2 dargestellten Anordnung der Wellenabe 14 jedoch nicht möglich ist, wird diese Ausführung zur Reduzierung des axialen Einbauraumes insbesondere bei elastischen Wellenkupplungen 10 genutzt, deren Kupplungselement 11 aus mehreren umfänglich beabstandeten Ringsegmenten zusammengesetzt ist.

Die erfindungsgemäße elastische Wellenkupplung 10 erreicht gegenüber dem Stand der Technik durch den Einsatz der membranähnlichen Ringscheibe 12 eine vergleichsweise hohe winklige Ausgleichsfähigkeit, die sich aus den geringen Winkeltoleranzen von Kupplungselement 11 und Bolzenkupplung 13 sowie aus der Winkeltoleranz von maximal 0,5° der membranähnlichen Ringscheibe 12 ergibt. Somit ist eine elastische Wellenkupplung 10 geschaffen, deren anguläre Ausgleichsfähigkeit, abgesehen von speziellen Einsatzzwecken, vollkommen ausreichend ist, ohne auf teure Elemente, wie beispielsweise eine Federstahlmembran, zurückgreifen zu müssen.

Durch die Anordnung des Widerlagerelementes 27 innerhalb des eingesenkten Bereiches des abtriebsseitigen Flansches 20 wird in Kombination mit der Bolzenkupplung 13 in Axialrichtung eine ausgesprochen schmale Bauform der erfindungsgemäßen Kupplung geschaffen, so dass diese auch bei sehr nah beieinander stehenden Aggregaten eingesetzt werden kann. Die elastische Kupplung 10 lässt sich auch in unsegmentierter Ausführung nach der Demontage der Bolzenkupplung 13 und der membranähnlichen Ringscheibe 12 dank des eingesenkten abtriebseitigen Flansches 20 radial austauschen, ohne die Aggregate auseinanderrücken zu müssen.

## Patentansprüche

1. Elastische Wellenkupplung (10) zur Verbindung eines antreibenden Aggregates wie einer Schwungscheibe eines Dieselmotors mit einem angetriebenen Aggregat wie einer Wellennabe (15), mit zumindest einem dreh- und radialelastischen Kupplungselement (11), das einen gummielastischen Ringkörper (16) mit jeweils an- und abtriebseitig anvulkanisiertem Befestigungsflansch (19, 20) umfasst und mit einer Bolzenkupplung (13), mittels derer die elastische Wellenkupplung (10) mit dem angetriebenen Aggregat axial steckbar verbunden ist, **dadurch gekennzeichnet, dass** zur Verbindung des abtriebseitigen Befestigungsflansches (20) mit der Bolzenkupplung (13) eine membranähnliche Ringscheibe (12) vorgesehen ist, deren Winkelelastizität anguläre Fluchtungsfehler der zu verbindenden Aggregate ausgleicht, und dass die Bolzen (31) der Bolzenkupplung (13) an der membranähnlichen Ringscheibe (12) angeordnet sind und die membranähnliche Ringscheibe (12) an dem abtriebseitigen Befestigungsflansch (20) angeordnet ist.

2. Elastische Wellenkupplung (10) zur Verbindung eines antreibenden Aggregates wie einer Schwungscheibe eines Dieselmotors mit einem angetriebenen Aggregat wie einer Wellennabe (15), mit zumindest einem dreh- und radialelastischen, im wesentlichen ringförmigen Kupplungselement (11), das von umfänglich beabstandeten Ringsegmenten gebildet ist, die jeweils zumindest einen gummielastischen Körper umfassen, der jeweils an- und abtriebseitig anvulkanisierte Flanschsegmente aufweist, wobei die Flanschsegmente der einzelnen Ringsegmente einen an- und einen abtriebseitigen Befestigungsflansch (19, 20) bilden und mit einer axial steckbar ausgebildeten Bolzenkupplung (13), mittels derer die elastische Wellenkupplung (10) mit dem angetriebenen Aggregat verbunden ist, **dadurch gekennzeichnet, dass** zur Verbindung des abtriebseitigen Befestigungsflansches (20) mit der Bolzenkupplung (13) eine membranähnliche Ringscheibe (12) vorgesehen ist, deren Winkelelastizität anguläre Fluchtungsfehler der zu verbindenden Aggregate ausgleicht, und dass die Bolzen (31) der Bolzenkupplung (13) an der membranähnlichen Ringscheibe (12) angeordnet sind und die Ringscheibe (12) an dem abtriebseitigen Befestigungsflansch (20) angeordnet ist.

3. Elastische Wellenkupplung nach Anspruch 2, **dadurch gekennzeichnet, dass** die membranähnliche, winkelelastische Ringscheibe (12) außenumfänglich an dem aus mehreren Flanschsegmenten gebildeten abtriebseitigen Befestigungsflansch (20) angeordnet ist und dass die membranähnliche Ringscheibe (12) die einzelnen Ringsegmente des Kupplungselementes (11) gegen axiale Verformung abstützend miteinander kuppelt.

4. Elastische Wellenkupplung nach einem der Ansprüche 1 bis 3, **dadurch gekennzeichnet, dass** die Bolzen (31) der Bolzenkupplung (13) nahe des Innenumfangs (u) der membranähnlichen, winkelelastischen Ringscheibe (12) an dieser angeordnet sind.

5. Elastische Wellenkupplung nach einem der Ansprüche 1 bis 4, **dadurch gekennzeichnet, dass** die Bolzen (31) der Bolzenkupplung (13) formschlüssig in Befestigungsbohrungen (28) der membranähnlichen Ringscheibe (12) eingreifen und dass die Ringscheibe (12) ein vom Antrieb auf den Abtrieb zu übertragendes Drehmoment formschlüssig auf die Bolzen (31) überträgt.

6. Elastische Wellenkupplung nach einem der Ansprüche 1 bis 5, **dadurch gekennzeichnet, dass** zwischen membranähnlicher Ringscheibe (12) und Befestigungsflansch (20) zumindest ein insbesondere als flachquerschnittiger Versteifungsring (27) ausgebildetes Widerlager angeordnet ist, in den die Befestigungsschrauben (30) der Bolzenkupplung (13), die Ringscheibe (12) abtriebseitig durchgreifend, eingreifen und die Bolzen (31) an der Ringscheibe (12) festlegen.

7. Elastische Wellenkupplung nach Anspruch 6, **dadurch gekennzeichnet, dass** der abtriebseitige Befestigungsflansch (20) in Richtung des antriebseitigen Befestigungsflansches (19) eingesenkt ist und das der eingesenkte Befestigungsflansch (20) und die membranähnliche winkelelastische Ringscheibe (12) einen Ringraum (26) bilden, in dem der flachquerschnittige Versteifungsring (27) angeordnet ist.

8. Elastische Wellenkupplung nach einem der vorhergehenden Ansprüche, **dadurch gekennzeichnet, dass** die membranähnliche, winkelelastische Ringscheibe (12) aus Metall, insbesondere aus Stahlblech gebildet ist.

9. Elastische Wellenkupplung nach einem der vorhergehenden Ansprüche, **dadurch gekennzeichnet, dass** die membranähnliche, winkelelastische Ringscheibe (12) aus einem ungehärteten Stahlblech gebildet ist.

10. Elastische Wellenkupplung nach einem der vorhergehenden Ansprüche, **dadurch gekennzeichnet, dass** die membranähnliche, winkelelastische Ringscheibe (12) aus einem Stahlblech gebildet ist, dessen Oberflächen unbehandelt sind.

11. Elastische Wellenkupplung nach einem der vorhergehenden Ansprüche, **dadurch gekennzeichnet, dass** die membranähnliche, winkelelastische Ringscheibe (12) so dimensioniert ist, dass sie einen Winkelversatz von maximal nur etwa 0,5 Grad zulässt.
